# EUROPEAN PATENT SPECIFICATION

(11) **EP 2 509 348 B1**
(45) Date of publication and mention of the grant of the patent: **13.06.2018**
(21) Application number: 11161070.5
(22) Date of filing: 04.04.2011
(51) Int. Cl.: H04W 8/26, H04W 8/20

(54) **Writing of MSISDN to a newly installed SIM card of mobile device**
Schreiben einer MSISDN auf eine neu installierte SIM-Karte eines Mobilgeräts
Inscription d'un numéro MSISDN sur une carte SIM nouvellement installée dans un terminal mobile

(43) Date of publication of application: 10.10.2012
(73) Proprietor: BlackBerry Limited, Waterloo, ON N2K 0A7 (CA)
(72) Inventor: Cormier, Jean-Philippe Paul, Kanata Ontario K2K 3K1 (CA); Dwyer, Johanna Lisa, Kanata Ontario K2K 3K1 (CA)
(74) Representative: Fennell, Gareth Charles

(56) References cited:
- EP-A1- 2 219 142
- US-A1- 2006 183 500

## Description

### FIELD

The technology disclosed herein (the "technology") relates to managing mobile communication identity. Exemplary implementations relate to maintaining an accurate Mobile Subscriber Integrated Digital Services Network (MSISDN) identity.

### BACKGROUND

EP 2219142 discloses that in a computer-implemented method of altering an interface, an interface associated with an application having time-dependent events is displayed. The interface displays at least one activatable component. At a pre-set time relative to a time for one of said time-dependent events, the interface is altered to add an added activatable component, or to set a pre-determined one of the activatable components of the interface as a selected component.

US 2006/183500 discloses that an identity module is activated in the following manner. A customization center stores an initial identity code in the identity module and communicates the initial identity code to a network management system. A distributor assigns a communication address to the identity module and communicates the communication address together with the initial identity code to the network management system. The identity module contacts the network management system via a communication device, whereby the network management system receives the initial identity code together with the communication address. The network management system recognizes the initial identity code together with the communication address and, in response, assigns an effective identity code to the identity module. Subsequently, the network management system sends a message to the communication device. This message comprises the effective identity code. The identity module receives the message via the communication device, extracts the effective identity code form the message and stores the effective identity code for future use.

### SUMMARY OF INVENTION

The invention is as defined in claims 1-4

### BRIEF DESCRIPTION OF THE DRAWINGS

Reference will now be made, by way of example, to the accompanying drawings which show example implementations of the technology.
FIG. 1 illustrates in block diagram form, a communication system in which implementations of the technology can be applied.
FIG. 2 illustrates methods of the technology.
FIG. 3 illustrates an exemplary mobile communication device.
FIG. 4 illustrates a block diagram of a communication device.
FIG. 5 illustrates a data processing architecture suitable for storing a computer program product of the present technology and for executing the program code of the computer program product.

### DETAILED DESCRIPTION

Reference now will be made in detail to implementations of the technology. Each example is provided by way of explanation of the technology only, not as a limitation of the technology.

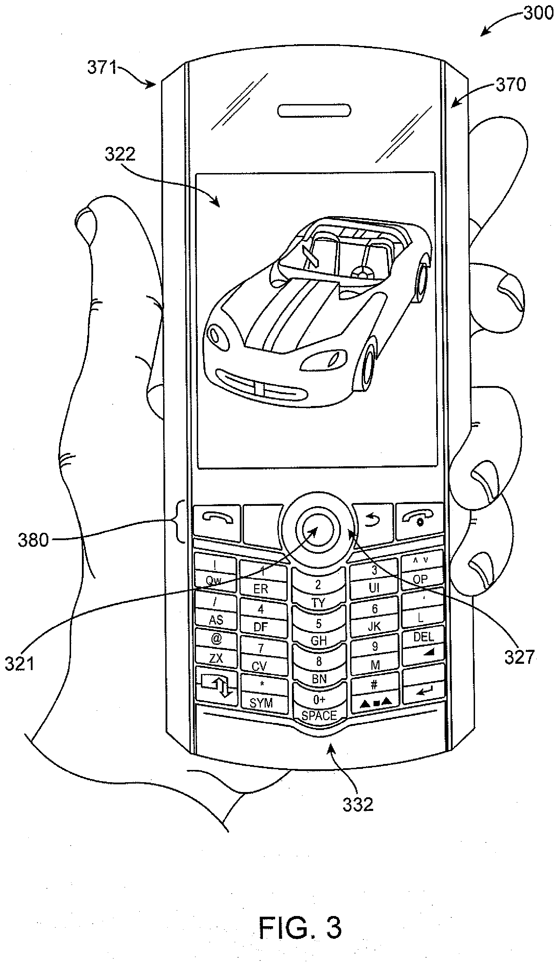

As will be appreciated from FIG. 3, an exemplary mobile communication device 300 (as an example of 11) comprises a display 322 located above a keyboard 332 constituting a user input means that is suitable for accommodating textual input to the device **300.** In some implementations, the keyboard **332** can be part of a touch screen display. The front face **370** of the device **300** has a navigation row **380.** As shown, the device **300** is of uni-body construction, also known as a "candy-bar" design.

The device **300** may include an auxiliary input that acts as a cursor navigation tool **327** and that may be also exteriorly located upon the front face **370** of the device **300.** The front face location of a cursor navigation tool **327** allows the tool to be thumb-actuable, e.g., like the keys of the keyboard **332.** Some implementations of the technology provide the navigation tool **327** in the form of a trackball **321** that may be utilized to instruct two-dimensional screen cursor movement in substantially any direction, as well as act as an actuator when the trackball **321** is depressed like a button. Other implementations can provide the navigation tool in the form of a track pad, a touchpad, a pointing stick, joystick, graphics tablet, or combinations thereof. The placement of the navigation tool **327** can be above the keyboard **332** and below the display screen **322**; here, it may avoid interference during keyboarding and does not block the operator's view of the display screen **322** during use.

The device **300** may be configured to send and receive messages. The device **300** includes a body **371** that can, in some implementations, be configured to be held in one hand by an operator of the device **300** during text entry. A display **322** is included that is located on a front face **370** of the body **371** and upon which information is displayed to the operator, e.g., during text entry. The device **300** may also be configured to send and receive voice communications such as mobile telephone calls. The device **300** also can include a camera (not shown) to allow the device **300** to take electronic photographs that can be referred to as photos or pictures. Further, the device **300** can be configured to operate a web browser.

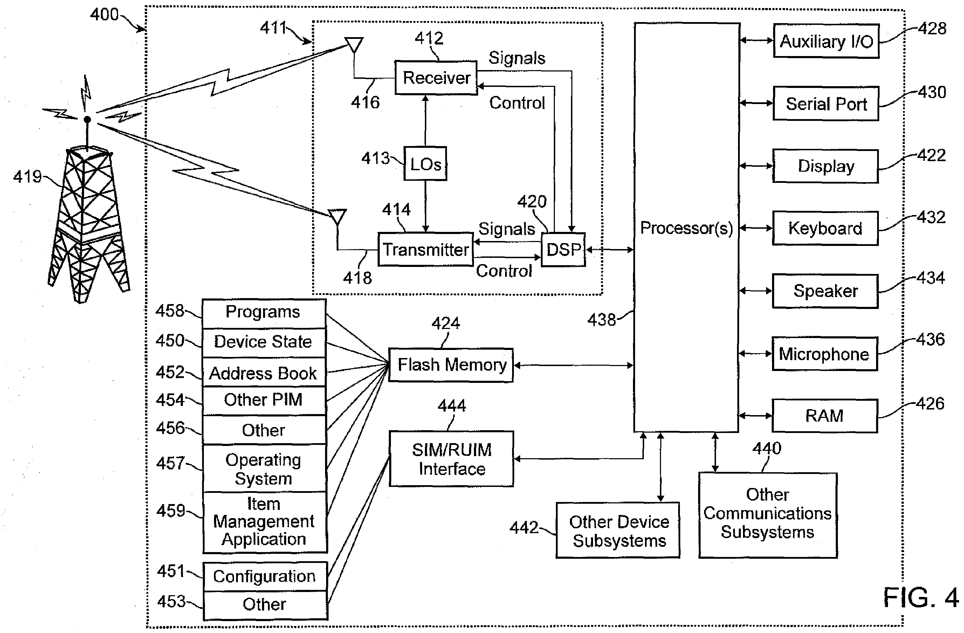

Referring to FIG. 4, a block diagram of a communication device, such as **300** and **11**, in accordance with an exemplary implementation is illustrated. As shown, the device **400** includes a microprocessor **438** that controls the operation of the communication device **400**. A communication subsystem **411** performs communication transmission and reception with the wireless network **419**. The microprocessor **438** further can be communicatively coupled with an auxiliary input/output (I/O) subsystem **428** that can be communicatively coupled to the communication device **400.** In at least one implementation, the microprocessor **438** can be communicatively coupled to a serial port (for example, a Universal Serial Bus port) **430** that can allow for communication with other devices or systems via the serial port **430.** A display **422** (e.g., **322**) can be communicatively coupled to microprocessor **438** to allow for display of information to an operator of the communication device **400.** When the communication device **400** is equipped with a keyboard **432** (e.g., **332**), the keyboard can also be communicatively coupled with the microprocessor **438.** The communication device **400** can include a speaker **434,** a microphone **436,** random access memory (RAM) **426,** and flash memory **424,** all of which may be communicatively coupled to the microprocessor **438.** Other similar components may be provided on the communication device **400** as well and optionally communicatively coupled to the microprocessor **438.** Other communication subsystems **440** and other communication device subsystems **442** are generally indicated as being functionally connected with the microprocessor **438** as well. An example of a communication subsystem **440** is a short range communication system such as BLUETOOTH® communication module or a WI-FI® communication module (a communication module in compliance with IEEE 802.11b) and associated circuits and components. Additionally, the microprocessor **438** is able to perform operating system functions and enables execution of programs on the communication device **400.** In some implementations not all of the above components are included in the communication device **400.** For example, in at least one implementation, the keyboard **432** is not provided as a separate component and is instead integrated with a touch screen as described below.

The auxiliary I/O subsystem **428** can take the form of a variety of different navigation tools (multi-directional or single-directional) such as a trackball navigation tool **321,** as illustrated in the exemplary implementation shown in FIG. 3, or a thumbwheel, a navigation pad, a joystick, touch-sensitive interface, or other I/O interface. These navigation tools may be located on the front surface of the communication device **400** or may be located on any exterior surface of the communication device **400.** Other auxiliary I/O subsystems may include external display devices and externally connected keyboards (not shown). While the above examples have been provided in relation to the auxiliary I/O subsystem **428,** other subsystems capable of providing input or receiving output from the communication device **400** are considered within the scope of this disclosure. Additionally, other keys may be placed along the side of the communication device **300** to function as escape keys, volume control keys, scrolling keys, power switches, or user programmable keys, and may likewise be programmed accordingly.

The keyboard **432** can include a plurality of keys that can be of a physical nature such as actuable buttons, or they can be of a software nature, typically constituted by representations of physical keys on a display **422** (referred to herein as "virtual keys"). It is also contemplated that the user input can be provided as a combination of the two types of keys. Each key of the plurality of keys is associated with at least one action which can be the input of a character, a command or a function. In this context, "characters" are contemplated to exemplarily include alphabetic letters, language symbols, numbers, punctuation, insignias, icons, pictures, and even a blank space.

In the case of virtual keys, the indicia for the respective keys are shown on the display **422,** which in one implementation is enabled by touching the display **422,** for example, with a stylus, finger, finger tip, finger nail, or other pointer, to generate the character or activate the indicated command or function. Some examples of displays **422** capable of detecting a touch include resistive, capacitive, projected capacitive, infrared and surface acoustic wave (SAW) touch screens.

Physical and virtual keys can be combined in many different ways as appreciated by those skilled in the art. In one implementation, physical and virtual keys are combined such that the plurality of enabled keys for a particular program or feature of the communication device **400** is shown on the display **422** in the same configuration as the physical keys. Using this configuration, the operator can select the appropriate physical key corresponding to what is shown on the display **422.** Thus, the desired character, command or function is obtained by depressing the physical key corresponding to the character, command or function displayed at a corresponding position on the display **422,** rather than touching the display **422.**

Furthermore, the communication device **400** is equipped with components to enable operation of various programs, as shown in FIG. 4. In an exemplary implementation, the flash memory **424** is enabled to provide a storage location for the operating system **457,** device programs **458,** and data. The operating system **457** is generally configured to manage other programs **458** that are also stored in memory **424** and executable on the processor **438.** The operating system **457** honors requests for services made by programs **458** through predefined program **458** interfaces. More specifically, the operating system **457** typically determines the order in which multiple programs **458** are executed on the processor **438** and the execution time allotted for each program **458,** manages the sharing of memory **424** among multiple programs **458,** handles input and output to and from other device subsystems **442,** and so on. In addition, operators can typically interact directly with the operating system **457** through a user interface usually including the keyboard **432** and display **422.** While in an exemplary implementation the operating system **457** is stored in flash memory **424,** the operating system **457** in other implementations is stored in read-only memory (ROM) or similar storage element (not shown). As those skilled in the art will appreciate, the operating system **457,** device program **458,** or parts thereof, may be loaded in RAM **426** or other volatile memory.

In some implementations, the flash memory **424** may contain programs **458** for execution on the device **400**, including - but not limited to - an address book **452**, a personal information manager (PIM) **454**, and a device state **450**. Furthermore, programs **458**, such as social software, and other information **456** including data can be segregated upon storage in the flash memory **424** of the device **400.**

When the communication device **400** is enabled for two-way communication within the wireless communication network **419,** it can send and receive signals from a mobile communication service. Examples of communication systems enabled for two-way communication include, but are not limited to, the General Packet Radio Service (GPRS) network, the Universal Mobile Telecommunication Service (UMTS) network, the Enhanced Data for Global Evolution (EDGE) network, the Code Division Multiple Access (CDMA) network, High-Speed Packet Access (HSPA) networks, Universal Mobile Telecommunication Service Time Division Duplexing (UMTS-TDD), Ultra Mobile Broadband (UMB) networks, Worldwide Interoperability for Microwave Access (WiMAX), and other networks that can be used for data and voice, or just data or voice, For the systems listed above, the communication device **400** may use a unique identifier to enable the communication device **400** to transmit and receive signals from the communication network **419.** Other systems may not use such identifying information. GPRS, UMTS, and EDGE use a Subscriber Identity Module (SIM) in order to allow communication with the communication network **419.** Likewise, most CDMA systems use a Removable User Identity Module (RUIM) in order to communicate with the CDMA network. The RUIM and SIM card can be used in multiple different communication devices **400.** The communication device **400** can be configured to operate some features without a SIM/RUIM card, but it will not necessarily be able to communicate with the network **419.** A SIM/RUIM interface **444** located within the communication device **400** allows for removal or insertion of a SIM/RUIM card (not shown). The SIM/RUIM card features memory and holds key configurations **451,** and other information **453** such as identification and subscriber related information. With a properly enabled communication device **400,** two-way communication between the communication device **400** and communication network **419** is possible.

If the communication device **400** is enabled as described above or the communication network **419** does not use such enablement, the two-way communication enabled communication device **400** is able to both transmit and receive information from the communication network **419.** The transfer of communication can be from the communication device **400** or to the communication device **400.** In order to communicate with the communication network **419,** the device **400** can be equipped with an integral or internal antenna **418** for transmitting signals to the communication network **419.** Likewise the device **400** can be equipped with another antenna **416** for receiving communication from the communication network **419.** These antennae (**416, 418**) in another exemplary implementation are combined into a single antenna (not shown). As one skilled in the art would appreciate, the antenna or antennae (**416**, **418**) in another implementation can be externally mounted on the communication device **400.**

When equipped for two-way communication, the communication device **400** features a communication subsystem **411.** As is understood in the art, this communication subsystem **411** is modified so that it can support the operational needs of the communication device **400.** The subsystem **411** includes a transmitter **414** and receiver **412** including the associated antenna or antennae (**416, 418**) as described above, local oscillators (LOs) **413,** and a processing module that in the presently described exemplary implementation is a digital signal processor (DSP) **420.**

It is contemplated that communication by the communication device **400** with the wireless network **419** can be any type of communication that both the wireless network **419** and communication device **400** are enabled to transmit, receive and process. In general, these can be classified as voice or data, or both voice and data. Voice communication generally refers to communication in which signals for audible sounds are transmitted by the communication device **400** through the communication network **419.** Data generally refers to all other types of communication that the communication device **400** is capable of performing within the constraints of the wireless network **419.**

Example device programs that can depend on such data include email, contacts and calendars. For each such program, synchronization with home-based versions of the program can be desirable for either or both of their long term and short term utility. As an example, emails are often time-sensitive, so substantially real time (or near-real time) synchronization may be desired. Contacts, on the other hand, can be usually updated less frequently without inconvenience. Therefore, the utility of the communication device **400** is enhanced when connectable within a communication system, and when connectable on a wireless basis in a network **419** in which voice, text messaging, and other data transfer are accommodated. Device **400** can include programs such as a web browser, a file browser, and client programs for interacting with server programs. Devices, e.g., **11, 300, 400,** for use in the technology can be characterized by an identification number assigned to the device. Such identification numbers cannot be changed and are locked to each device.

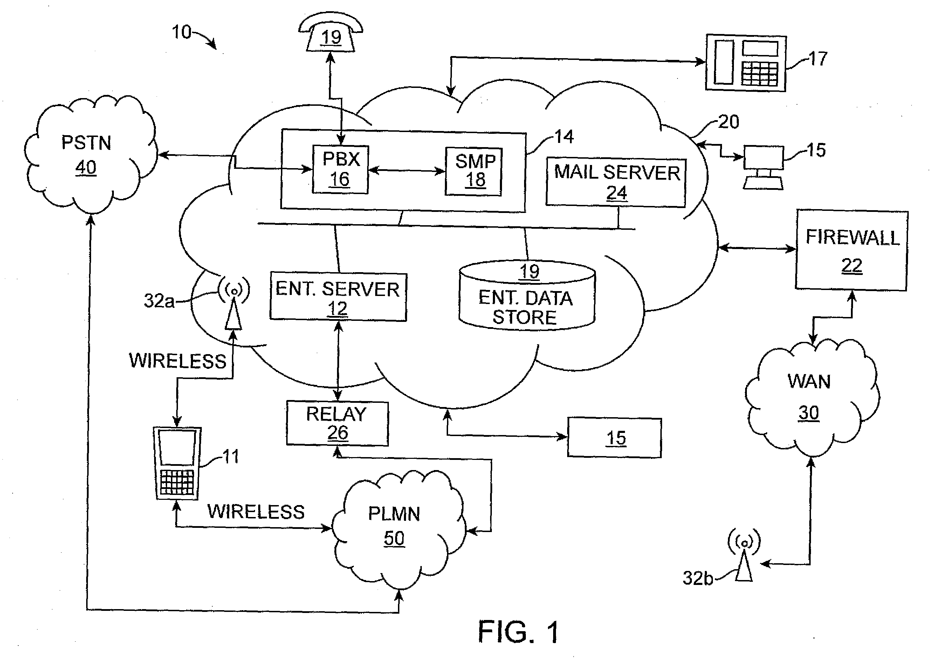

Implementations of the technology can be realized as programming across the architectural elements identified in FIG. 1, FIG. 3, and FIG. 4. In some implementations, the programming is entirely on the mobile communications device **11.** In some implementations, programming for the technology is on the mobile communications device **11,** while data used by the mobile communications device **11** is on the wireless connector system **120** or a network server such as content server **134,** messaging server **132,** or application server **136.** In some implementations, programming for the technology can be realized on a remote server. Allocation of functionality among architectural elements can be a function of several factors including latency, processing resource availability and efficient usage, storage availability and efficient usage, and revenue opportunities.

Reference is now made to Figure 1, which shows, in block diagram form, an example system, generally designated **10,** for the control and management of communications. The system **10** includes an enterprise or business system **20,** which in many implementations includes a local area network (LAN). In the description below, the enterprise or business system **20** may be referred to as an enterprise network **20.** It will be appreciated that the enterprise network **20** may include more than one network and may be located in multiple geographic areas in some implementations.

The enterprise network **20** may be connected, often through a firewall **22,** to a wide area network (WAN) **30,** such as the Internet. The enterprise network **20** may also be connected to a public switched telephone network (PSTN) **40** via direct inward dialing (DID) trunks or primary rate interface (PRI) trunks.

The enterprise network **20** may also communicate with a public land mobile network (PLMN) **50,** which may also be referred to as a wireless wide area network (WWAN) or, in some cases, a cellular network. The connection with the PLMN **50** may be made via a relay **26,** as known in the art.

The enterprise network **20** may also provide a wireless local area network (WLAN) **32**a featuring wireless access points. Other WLANs **32** may exist outside the enterprise network **20.** For example, WLAN **32**b may be connected to WAN **30.**

The system **10** may include a number of enterprise-associated mobile devices **11** (only one shown). The mobile devices **11** may include devices equipped for cellular communication through the PLMN **50,** mobile devices equipped for Wi-Fi communications over one of the WLANs **32,** or dual-mode devices capable of both cellular and WLAN communications. WLANs **32** may be configured in accordance with one of the IEEE 802.11 specifications.

It will be understood that the mobile devices **11** include one or more radio transceivers and associated processing hardware and software to enable wireless communications with the PLMN **50** and/or one of the WLANs **32.** In various implementations, the PLMN **50** and mobile devices **11** may be configured to operate in compliance with any one or more of a number of wireless protocols, including GSM, GPRS, CDMA, EDGE, UMTS, EvDO, HSPA, 3GPP, or a variety of others. It will be appreciated that the mobile device **11** may roam within the PLMN **50** and across PLMNs, in known manner, as a user moves. In some instances, the dual-mode mobile devices **11** and/or the enterprise network **20** are configured to facilitate roaming between the PLMN **50** and a WLAN **32**, and are thus capable of seamlessly transferring sessions (such as voice calls) from a connection with the cellular interface of the dual-mode device **11** to the WLAN **32** interface of the dual-mode device **11**, and vice versa.

The enterprise network **20** typically includes a number of networked servers, computers, and other devices. For example, the enterprise network **20** may connect one or more desktop or laptop computers **15** (one shown). The connection may be wired or wireless in some implementations. The enterprise network **20** may also connect to one or more digital telephone sets **17** (one shown).

The enterprise network **20** may include one or more mail servers, such as mail server **24,** for coordinating the transmission, storage, and receipt of electronic messages for client devices operating within the enterprise network **20.** Typical mail servers include the Microsoft Exchange ServerTM and the IBM Lotus DominoTM server. Each user within the enterprise typically has at least one user account within the enterprise network **20.** Associated with each user account is information such as: message address information, such as an e-mail address; and enterprise telephone exchange, e.g., a phone exchange that can be associated with a digital telephone set, e.g., **17.** Information on users of the enterprise network **24** and its resources can be stored in an enterprise data store **19**, e.g., implemented with Microsoft® Active Directory. Messages addressed to a user message address are stored on the enterprise network **20** in the mail server **24.** The messages may be retrieved by a user using a messaging application, such as an e-mail client application. The messaging application may be operating on a user's computer **15** connected to the enterprise network **20** within the enterprise. In some implementations, a user may be permitted to access stored messages using a remote computer, for example at another location via the WAN **30** using a VPN connection. Using the messaging application, a user may also compose and send messages addressed to others, within or outside the enterprise network **20.** The messaging application causes the mail server **24** to send a composed message to the addressee, often via the WAN **30.**

The relay **26** serves to route messages received over the PLMN **50** from the mobile device **11** to the corresponding enterprise network **20.** The relay **26** also pushes messages from the enterprise network **20** to the mobile device **11** via the PLMN **50.**

The enterprise network **20** also includes an enterprise server **12.** Together with the relay **26**, the enterprise server **12** functions to redirect or relay incoming e-mail messages addressed to a user's e-mail address within the enterprise network **20** to a user's mobile device **11** and to relay incoming e-mail messages composed and sent via the mobile device **11** to the intended recipients within the WAN **30** or elsewhere. The enterprise server **12** and relay **26** together facilitate "push" e-mail service for the mobile device **11** enabling the user to send and receive e-mail messages using the mobile device **11** as though the user were connected to an e-mail client within the enterprise network **20** using the user's enterprise-related e-mail address, for example on a computer **15.**

As is typical in many enterprises, the enterprise network **20** includes a Private Branch eXchange system (although in various implementations the PBX may be a standard PBX or an IP-PBX, for simplicity the description below uses the term PBX system to refer to both) **16** having a connection with the PSTN **40** for routing incoming and outgoing voice calls for the enterprise. The PBX system **16** is connected to the PSTN **40** via DID trunks or PRI trunks, for example. The PBX system **16** may use ISDN signaling protocols for setting up and tearing down circuit-switched connections through the PSTN **40** and related signaling and communications. In some implementations, the PBX system **16** may be connected to one or more conventional analog telephones **19.** The PBX system **16** is also connected to the enterprise network **20** and, through it, to telephone terminal devices, such as digital telephone sets **17**, soft-phones operating on computers **15**, etc. Within the enterprise, each individual may have an associated extension number, sometimes referred to as a PNP (private numbering plan), or direct dial phone number. Calls outgoing from the PBX system **16** to the PSTN **40** or incoming from the PSTN **40** to the PBX system 16 are typically circuit-switched calls. Within the enterprise, e.g., between the PBX system **16** and terminal devices, voice calls are often packet-switched calls, for example Voice-over-IP (VoIP) calls.

The enterprise network **20** may further include a Service Management Platform (SMP) **18** for performing some aspects of messaging or session control, like call control and advanced call processing features. The SMP **18** may, in some cases, also perform some media handling. Collectively the SMP **18** and PBX system **16** may be referred to as the enterprise communications platform, generally designated **14.** It will be appreciated that the enterprise communications platform **14** and, in particular, the SMP **18,** is implemented on one or more servers having suitable communications interfaces for connecting to and communicating with the PBX system **16,** and, in some implementations, the DID/PRI trunks. Although the SMP **18** may be implemented on a stand-alone server, it will be appreciated that it may be implemented into an existing control agent/server as a logical software component. As will be described below, the SMP **18** may be implemented as a multi-layer platform.

The enterprise communications platform **14** implements the switching to connect session legs and may provide the conversion between, for example, a circuit-switched call and a VoIP call, or to connect legs of other media sessions. In some implementations, in the context of voice calls the enterprise communications platform **14** provides a number of additional functions including automated attendant, interactive voice response, call forwarding, voice mail, etc. It may also implement certain usage restrictions on enterprise users, such as blocking international calls or 1-900 calls. In many implementations, Session Initiation Protocol (SIP) may be used to set-up, manage, and terminate media sessions for voice calls. Other protocols may also be employed by the enterprise communications platform **14,** for example, Web Services, Computer Telephony Integration (CTI) protocol, Session Initiation Protocol for Instant Messaging and Presence Leveraging Extensions (SIMPLE), and various custom Application Programming Interfaces (APIs), as will be described in greater detail below.

One of the functions of the enterprise communications platform **14** is to extend the features of enterprise telephony to the mobile devices **11.** For example, the enterprise communications platform **14** may allow the mobile device **11** to perform functions akin to those normally available on a standard office telephone, such as the digital telephone set **17** or analog telephone set **15.** Example features may include direct extension dialing, enterprise voice mail, conferencing, call transfer, call park, etc.

The combined functions of the communications platform **14** in concert with other elements of FIG 1 can be described as fixed-mobile convergence (FMC), and can provide for a variety of features such as: single number reach (calls to an enterprise phone **17, 19** can be forwarded to a mobile device **11**); simultaneous ring (incoming calls ring concurrently to an enterprise phone **17. 19** and a mobile device **11**); single voicemail (both enterprise and mobile voice mails are deposited in the same voice mailbox); mobile number protection (on outbound mobile-originated calls, the user's desk number is provided on the caller ID); true caller ID on inbound calls (inbound calls received on the mobile device **11** show the name and phone number of the actual caller); and enterprise phone-to-mobile transfer (the ability to transfer in-progress calls between the mobile device and the desk set).

The SMP architecture of FIG. 1 can use a cellular data path (e.g., from enterprise server **12** to relay **26** to PLMN **50** to mobile device **11**) in parallel to the voice path (e.g., via the PBX **16**) to carry signaling messages between the PBX **16** and the enterprise server **12,** which can relay them to the SMP **18.** As described elsewhere herein, the configuration involves an SMP **18** that connects to the PBX **16** and to the enterprise server **12**; a DID number can be assigned to each mobile device **11.** When a call is placed to the user's desk number, the PBX **16** can connect it to the SMP **18.** The SMP **18** then can place a call to the user's desk set and concurrently send a call request through the enterprise server **12,** which forwards it over the cellular data network to ring the mobile **11.** When the call is answered on one device, the ringing is stopped on the other. When an outbound mobile call is placed, a client in the mobile device **11** sends a signaling message with the called party's number over the cellular data network to the enterprise server **12**, which in turn signals SMP **18**. The SMP **18** places a call to the mobile **11** and places a second call to the called party; the two calls are connected together in the SMP **18.**

A SIM card or Universal Integrated Circuit Card (UICC) (USIM, RUIM, CSIM), typically on a removable SIM card, can store the International Mobile Subscriber Identity (IMSI) used to identify a subscriber on mobile communication devices (e.g., as mobile phones **11,** computers, and other electronic communication devices). The SIM card can allow users to change mobile communication devices by removing the SIM card from one device and inserting it into another device. Using multiple SIM cards can allow the use of multiple services without the need to carry two communication devices at the same time. For example, the same mobile communication device, e.g., **11,** can be used for business and private use with separate numbers and bills; or for travel, with an additional SIM for the country visited. Using multiple SIM cards allows the user to take advantage of different pricing plans for calls and text messages to certain destinations as well as mobile data usage.

MSISDN is a number uniquely identifying a voice subscription in a GSM or a UMTS mobile network. Simply put, it is the telephone number of the SIM card in a mobile/cellular phone. This abbreviation has several interpretations, the most common one being "Mobile Subscriber Integrated Services Digital Network" number.

The IMSI is generally used to identify a mobile subscriber. The MSISDN is used for routing calls to the subscriber. The MSISDN typically is the number dialed to connect a call to the mobile device. A SIM is uniquely associated to an IMSI, while the MSISDN can change in time (e.g. due to number portability), i.e. different MSISDNs can be associated to one SIM over the lifetime of the SIM.

As specified in 3GPP TS 31.102, the MSISDN can be written to a SIM card by the user and the carrier. While a communication device, e.g., **11,** may work on a carrier's network without a valid MSISDN, a valid MSISDN is required on a SIM card for the device to gain the benefits of fixed-mobile convergence by operating with an SMP **18**. But it is not uncommon that the MSISDN is either not written on the SIM card, or an incorrect MSISDN is written on the SIM card.

In some implementations of the technology, if the SMP client on the mobile communication device detects that the MSISDN on the current active SIM is invalid, then the SMP client can disable calling line identification restriction on the mobile (or the SMP can use Calling Line ID restriction override) and call the SMP. Where Automatic Number Identification (ANI) is available, lifting or overriding the restriction will be unnecessary. The SMP can answer the incoming call and use, IP, SIP or il to complete the association between the MSISDN and the user. Once this association is complete, the number, e.g., discovered through call display by the SMP, can be transmitted to the SMP client on the mobile device **11.** Since the MSISDN file on the SIM is PIN protected as specified in 3GPP TS 31.102, the client can write the new value on the SIM for future use and inform the SMP through registration or other means.

In some implementations the SMP client can notify the SMP of a potential problem with the MSISDN, it can inform the SMP server that it will initiate a call to the SMP to start the user-to-MSISDN association. In some implementations the SMP can notify the SMP client of a potential problem with the MSISDN to trigger the user-to-MSISDN association process. Such notification can be via the PBX **16** or via the enterprise server **12.**

In some implementations, the SMP can have a stored list of active phone numbers for each user associated with an IMSI or MCC (Mobile Country Code and MNC (Mobile Network Code), When the SMP client discovers a SIM with new valid MSISDN it can query the server for the appropriate phone number and populate correctly as stated above.

In another implementation SMP could trigger an Over The Air (OTA) SMS or BIP update to update the MSISDN elementary file on the SIM card to the appropriate value; assuming the MVS server has ties with the carrier OTA update system. In another implementation the SMP client can use USSD commands with the carrier network to query the number.

Other triggers for updating/revising/adding an MSISDN can include installation of a new SIM card, register with the SMP, the SMP initiates repopulate the SIM card for some other reason using the signaling channels, e.g., failed to establish a call.

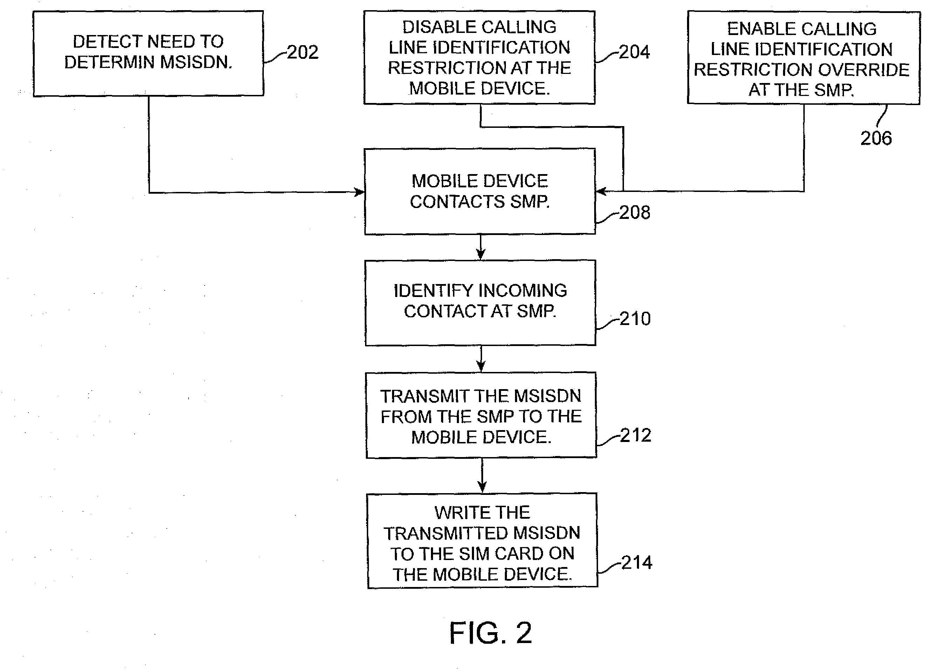

Referring to FIG. 2, methods **200** of the technology for identifying an MSISDN of a mobile communication device in an extended enterprise voice network comprising the mobile device, an enterprise server, a PBX, and a service management platform SMP are illustrated. The need to determine an MSISDN is detected **202.** For example, the need to determine an MSISDN can arise from detecting a new SIM card in the mobile device **11,** or from detecting a missing MSISDN (e.g., upon failure of the SMP to contact the mobile device using an MSISDN known to the SMP).

At least one of the following can be implemented if ANI is not available: disabling calling line identification restriction at the mobile communication device **204**, and enable calling line identification restriction override at the SMP **206.** The mobile device contacts the SMP **208.** For example, contacting the SMP can comprise calling the SMP via the PLMN and PSTN from the mobile communication device, or contacting via PLMN and enterprise server from the mobile communication device.

The incoming contact is identified at the SMP **210.** For example, identification can be by identifying a calling number of an incoming call, or by identifying a hardware identifier for the mobile communication device; or by mapping the identified hardware identifier to an MSISDN though a hardware identifier/MSISDN lookup table; or by using i1 to associate between the MSISDN and a user.

The MSISDN is then transmitted to the mobile device from the SMP **212.** For example, the MSISDN can be transmitted via hardware message (e.g., BlackBerry™ PIN message), SMS, or other data transfer via the PBX **16** or the enterprise server **12.** The transmitted MSISDN is then written to the SIM card at the mobile device **214.**

The present technology can take the forms of hardware, software or both hardware and software elements. In some implementations, the technology is implemented in software, which includes but is not limited to firmware, resident software, microcode, a Field Programmable Gate Array (FPGA), graphics processing unit (GPU), or Application-Specific Integrated Circuit (ASIC), etc. In particular, for real-time or near real-time use, an FPGA or GPU implementation would be desirable.

Furthermore, portions of the present technology can take the form of a computer program product comprising program modules accessible from computer-usable or computer-readable medium storing program code for use by or in connection with one or more computers, processors, or instruction execution system. For the purposes of this description, a computer-usable or computer readable medium can be any apparatus that can contain, store, communicate, propagate, or transport the program for use by or in connection with the instruction execution system, apparatus, or device. The medium can be non-transitory (e.g., an electronic, magnetic, optical, electromagnetic, infrared, or semiconductor system (or apparatus or device)) or transitory (e.g., a propagation medium). Examples of a non-transitory computer-readable medium include a semiconductor or solid state memory, magnetic tape, a removable computer diskette, a random access memory (RAM), a read-only memory (ROM), a rigid magnetic disk and an optical disk. Current examples of optical disks include compact disk - read only memory (CD-ROM), compact disk - read/write (CD-R/W) and DVD. Both processors and program code for implementing each as aspect of the technology can be centralized or distributed (or a combination thereof) as known to those skilled in the art.

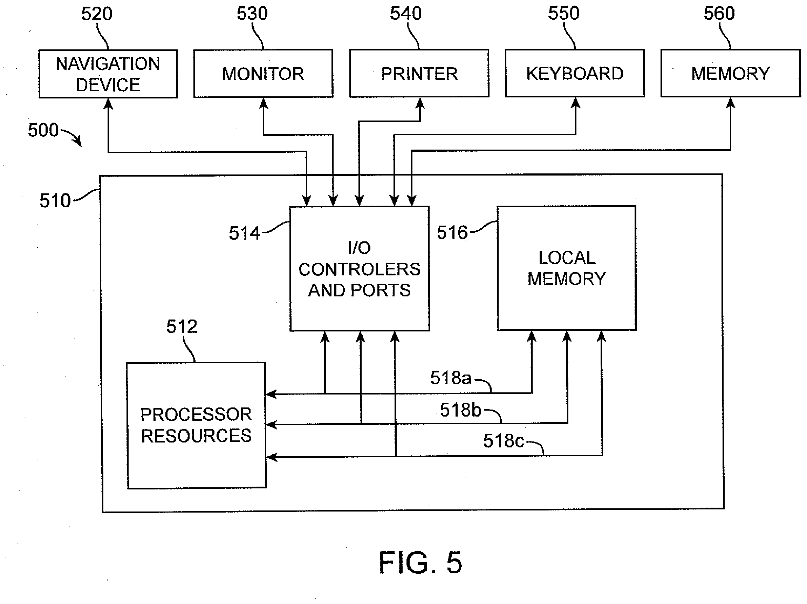

Referring to FIG. 5, a data processing system (e.g., **500**) suitable for storing a computer program product of the present technology and for executing the program code of the computer program product can include at least one processor (e.g., processor resources **512**) coupled directly or indirectly to memory elements through a system bus (e.g., **518** comprising data bus **518a,** address bus **518b,** and control bus **518c**)**.** The memory elements can include local memory (e.g., **516**) employed during actual execution of the program code, bulk storage (e.g.., **560**), and cache memories (e.g., including cache memory as part of local memory or integrated into processor resources) that provide temporary storage of at least some program code in order to reduce the number of times code must be retrieved from bulk storage during execution. Input/output or I/O devices (including but not limited to keyboards **550,** displays **530,** pointing devices **520,** etc.) can be coupled to the system either directly or through intervening I/O controllers (e.g., **514**). Network adapters can also be coupled to the system to enable the data processing system to become coupled to other data processing systems or remote printers or storage devices through intervening private or public networks. Modems, cable modem and Ethernet cards are just a few of the currently available types of network adapters. Such systems can be centralized or distributed, e.g., in peer-to-peer and client/server configurations. In some implementations, the data processing system is implemented using one or both of FPGAs and ASICs.

## Claims

1. A computer-implemented method for changing, due to number portability, the MSISDN of a SIM card of a mobile communication device (11) in an extended enterprise voice network comprising the mobile device, an enterprise server (12), a private branch exchange, PBX, (16) and a service management platform, SMP, (18), wherein the PBX is connected to a PSTN (40) and the enterprise server is connected via a relay (26) to a PLMN (50); the method comprising:
upon installation of a new SIM card, detecting, by a SMP client on the mobile communication device, an invalid MSISDN;
contacting, by the mobile communication device, in response to the detection, the SMP from the mobile communication device by either calling the SMP via the PLMN and the PSTN, or contacting the SMP via the PLMN and the enterprise server;
identifying the incoming contact at the SMP, said identifying comprising identifying a hardware identifier for the mobile communication device;
mapping the identified hardware identifier to an MSISDN through a hardware identifier/MSISDN lookup table;
transmitting the MSISDN to the mobile device from the SMP via a hardware message, a SMS, or other data transfer via the PBX or the enterprise server; and
writing, by the SMP client, the received MSISDN to the SIM card for future use and informing the SMP accordingly.

2. The method of Claim 1 wherein detecting the invalid MSISDN comprises:
detecting a new SIM card in the mobile communication device.

3. A computer program product for changing, due to number portability, the MSISDN of a SIM card of a mobile communication device (11) in an extended enterprise voice network comprising the mobile device, an enterprise server (12), a private branch exchange, PBX, (16) and a service management platform, SMP, (18), wherein the PBX is connected to a PSTN (40) and the enterprise server is connected via a relay (26) to a PLMN (50); the computer program product comprising:
a computer-readable medium encoded with instructions that when executed by processor resources performs the method of any one of Claim 1 or Claim 2.

4. A system (10) for changing, due to number portability, the MSISDN of a SIM card of a mobile communication device (11) in an extended enterprise voice network comprising the mobile device, an enterprise server (12), a private branch exchange, PBX, (16) and a service management platform, SMP, (18), wherein the PBX is connected to a PSTN (40) and the enterprise server is connected via a relay (26) to a PLMN (50); the system (10) comprising:
processor resources;
a computer-readable medium:
in communication with processor resources, and
encoded with instructions that when executed by a processor performs the method of any one of Claim 1 or Claim 2.

## Patentansprüche

1. Computerumgesetztes Verfahren zum Ändern auf Grund von Nummernübertragbarkeit der MSISDN einer SIM-Karte einer mobilen Kommunikationsvorrichtung (11) in einem erweiterten Unternehmenssprachnetzwerk, das die mobile Vorrichtung, einen Unternehmensserver (12), eine Nebenstellenanlage, PBX, (16) und eine Dienstverwaltungsplattform, SMP, (18) umfasst, wobei die PBX mit einem PSTN (40) verbunden ist und der Unternehmensserver über ein Relais (26) mit einem PLMN (50) verbunden ist; wobei das Verfahren folgende Schritte umfasst:
beim Installieren einer neuen SIM-Karte, Detektieren einer ungültigen MSISDN durch einen SMP-Client auf der mobilen Kommunikationsvorrichtung;
Kontaktieren durch die mobile Kommunikationsvorrichtung, als Reaktion auf die Detektion, der SMP von der mobilen Kommunikationsvorrichtung aus, entweder durch Anrufen der SMP über das PLMN und das PSTN oder durch Kontaktieren der SMP über das PLMN und den Unternehmensserver;
Identifizieren des ankommenden Kontakts an der SMP, wobei das Identifizieren das Identifizieren einer Hardware-Kennung für die mobile Kommunikationsvorrichtung umfasst;
Zuordnen der identifizierten Hardware-Kennung zu einer MSISDN über eine Hardware-Kennung/MSISDN-Verweistabelle;
Senden der MSISDN an die mobile Vorrichtung von der SMP über eine Hardware-Nachricht, eine SMS oder eine andere Datenübertragung über die PBX oder den Unternehmensserver; und
Schreiben durch den SMP-Client der empfangenen MSISDN auf die SIM-Karte zur zukünftigen Verwendung und entsprechendes Informieren der SMP.

2. Verfahren nach Anspruch 1, wobei das Detektieren der ungültigen MSISDN Folgendes umfasst:
Detektieren einer neuen SIM-Karte in der mobilen Kommunikationsvorrichtung.

3. Computerprogrammprodukt zum Ändern auf Grund von Nummernübertragbarkeit der MSISDN einer SIM-Karte einer mobilen Kommunikationsvorrichtung (11) in einem erweiterten Unternehmenssprachnetzwerk, das die mobile Vorrichtung, einen Unternehmensserver (12), eine Nebenstellenanlage, PBX, (16) und eine Dienstverwaltungsplattform, SMP, (18) umfasst, wobei die PBX mit einem PSTN (40) verbunden ist und der Unternehmensserver über ein Relais (26) mit einem PLMN (50) verbunden ist; wobei das Computerprogrammprodukt Folgendes umfasst:
ein computerlesbares Medium, das mit Anweisungen codiert ist, die, wenn sie durch Prozessorressourcen abgearbeitet werden, das Verfahren nach einem der Ansprüche 1 oder 2 ausführen.

4. System (10) zum Ändern auf Grund von Nummernübertragbarkeit der MSISDN einer SIM-Karte einer mobilen Kommunikationsvorrichtung (11) in einem erweiterten Unternehmenssprachnetzwerk, das die mobile Vorrichtung, einen Unternehmensserver (12), eine Nebenstellenanlage, PBX, (16) und eine Dienstverwaltungsplattform, SMP, (18) umfasst, wobei die PBX mit einem PSTN (40) verbunden ist und der Unternehmensserver über ein Relais (26) mit einem PLMN (50) verbunden ist; wobei das System (10) Folgendes umfasst:
Prozessorressourcen;
ein computerlesbares Medium:
in Kommunikation mit Prozessorressourcen, und
codiert mit Anweisungen, die, wenn sie durch einen Prozessor abgearbeitet werden, das Verfahren nach einem der Ansprüche 1 oder 2 ausführen.

## Revendications

1. Procédé mis en oeuvre par ordinateur pour modifier, en raison de la portabilité des numéros, le MSISDN d'une carte SIM d'un dispositif de communication mobile (11) dans un réseau téléphonique d'entreprise étendu comprenant le dispositif mobile, un serveur d'entreprise (12), un autocommutateur privé, PBX, (16) et une plate-forme de gestion de service, SMP, (18), où le PBX est connecté à un RTCP (40) et le serveur d'entreprise est connecté par l'intermédiaire d'un relais (26) à un RMTP (50) ; le procédé consistant à :
détecter, lors de l'installation d'une nouvelle carte SIM, par un client SMP sur le dispositif de communication mobile, un MSISDN invalide ;
établir un contact, par le dispositif de communication mobile, en réponse à la détection, avec la SMP à partir du dispositif de communication mobile soit en appelant la SMP par l'intermédiaire du RMTP et du RTCP, soit en établissant un contact avec la SMP par l'intermédiaire du RMTP et du serveur d'entreprise ;
identifier le contact entrant au niveau de la SMP, ladite identification comprenant l'identification d'un identificateur de matériel pour le dispositif de communication mobile ;
mettre en correspondance l'identificateur de matériel identifié avec un MSISDN via une table de consultation d'identificateur de matériel/MSISDN ;
transmettre le MSISDN au dispositif mobile depuis la SMP par l'intermédiaire d'un message matériel, d'un SMS, ou d'un autre transfert de données par l'intermédiaire du PBX ou du serveur d'entreprise ; et
écrire, par le client SMP, le MSISDN reçu sur la carte SIM pour une utilisation future et informer la SMP en conséquence.

2. Procédé de la revendication 1, dans lequel la détection du MSISDN invalide comprend :
la détection d'une nouvelle carte SIM dans le dispositif de communication mobile.

3. Produit de programme informatique pour modifier, en raison de la portabilité des numéros, le MSISDN d'une carte SIM d'un dispositif de communication mobile (11) dans un réseau téléphonique d'entreprise étendu comprenant le dispositif mobile, un serveur d'entreprise (12), un autocommutateur privé, PBX, (16) et une plate-forme de gestion de service, SMP, (18), où le PBX est connecté à un RTCP (40) et le serveur d'entreprise est connecté par l'intermédiaire d'un relais (26) à un RMTP (50) ; le produit de programme informatique comprenant :
un support lisible par ordinateur codé avec des instructions qui, lorsqu'elles sont exécutées par des ressources de processeur, réalisent le procédé de l'une quelconque des revendications 1 et 2.

4. Système (10) pour modifier, en raison de la portabilité des numéros, le MSISDN d'une carte SIM d'un dispositif de communication mobile (11) dans un réseau téléphonique d'entreprise étendu comprenant le dispositif mobile, un serveur d'entreprise (12), un autocommutateur privé, PBX, (16) et une plate-forme de gestion de service, SMP, (18), où le PBX est connecté à un RTCP (40) et le serveur d'entreprise est connecté par l'intermédiaire d'un relais (26) à un RMTP (50) ; le système (10) comprenant :
des ressources de processeur ;
un support lisible par ordinateur :
en communication avec des ressources de processeur, et
codé avec des instructions qui, lorsqu'elles sont exécutées par un processeur, réalisent le procédé de l'une quelconque des revendications 1 et 2.
